# EUROPEAN PATENT SPECIFICATION

(11) **EP 2 243 008 B1**
(45) Date of publication and mention of the grant of the patent: **29.08.2018**
(21) Application number: 09704541.3
(22) Date of filing: 26.01.2009
(51) Int. Cl.: G01J 3/44, G01J 3/28, G01N 21/65, G01J 3/02

(54) **LINE SCANNING RAMAN SPECTROSCOPIC APPARATUS**
GERÄT MIT EINEM LINIENSCANNER FÜR DIE RAMAN SPEKTROSKOPIE
APPAREIL DE SPECTROSCOPIE RAMAN À BALAYAGE LINÉAIRE

(30) Priority: 25.01.2008 WO PCT/GB2008/000252; 29.02.2008 GB 0803798
(43) Date of publication of application: 27.10.2010
(73) Proprietor: Renishaw PLC, Wotton-Under-Edge Gloucestershire GL12 8JR (GB)
(72) Inventor: HAYWARD, Ian, Paul, Wiltshire BA12 8PY (GB); SMITH, Brian, John, Edward, Gloucestershire GL11 5NH (GB)
(74) Representative: Rolfe, Edward William
(86) International application number: PCT/GB2009/000214
(87) International publication number: WO 2009/093050

(56) References cited:
- BOWDEN M ET AL: "Line-scanned micro Raman spectroscopy using a cooled CCD imaging detector" Journal of Raman Spectroscopy UK, vol. 21, no. 1, 1990, pages 37-41, XP002483938 ISSN: 0377-0486
- PITT G D ET AL: "Engineering aspects and applications of the new Raman instrumentation" IEE Proceedings-Science, Measurement and Technology IEE UK, vol. 152, no. 6, 2005, pages 241-318, XP002483939 ISSN: 1350-2344
- LANKERS M: "A DEVICE FOR SURFACE-SCANNING MICRO-RAMAN SPECTROSCOPY" APPLIED SPECTROSCOPY, THE SOCIETY FOR APPLIED SPECTROSCOPY. BALTIMORE, US, vol. 46, no. 9, 1 September 1992 (1992-09-01), pages 1331-1334, XP000296797 ISSN: 0003-7028

## Description

### Field of the Invention

This invention relates to spectroscopic apparatus and methods. It is particularly useful in Raman spectroscopy, though it can equally be used in other forms of spectroscopy, e.g. using fluorescence, narrow-line photoluminescence or cathodoluminescence.

### Description of Prior Art

An example of Raman spectroscopic apparatus is shown in US Patent No. 5,442,438 (Batchelder et al). Light from a laser source is focussed to a spot on a sample. Interaction between the light and the molecules of the sample causes Raman scattering into a spectrum having frequencies and wavenumbers which are shifted relative to the exciting laser frequency. After filtering out the laser frequency, a dispersive device such as a diffraction grating disperses this scattered Raman spectrum across a two-dimensional photodetector array. Different molecular species have different characteristic Raman spectra, and so the effect can be used to analyse the molecular species present. The Raman spectrum can also give other information, such as the local stresses or strains in the sample. The photodetector array may for example take the form of a charge-coupled device (CCD) having an array of pixels in which charge accumulates in proportion with the light received.

If it is desired to map an area of the sample, rather than just a single point, then it is known to mount the sample on a stage which can be moved in orthogonal directions X,Y. Alternatively, movable mirrors may deflect the light beam across the surface of the sample in X and Y directions. Thus, a raster scan of the sample can take place, giving Raman spectra at each point in the scan.

To reduce the time taken for a scan, it is known from Bowden et al, Journal of Raman Spectroscopy, vol 21, 37-41(1990) to illuminate the sample not with a point focus, but with a line focus. This enables the acquisition of spectra from multiple points within the line simultaneously. On the CCD detector, it is arranged that an image of the line extends orthogonally to the direction of spectral dispersion. This enables efficient use of the two-dimensional nature of the detector to acquire the multiple spectra simultaneously.

It is known from Pitt et al, IEE Proceedings Science, Measurement and Technology, Vol. 152, No.6, November 2005 to continuously rotate the grating during exposure. The charges at the pixels are shifted synchronously along the rows. The result is that now becomes possible to measure over very large spectral ranges.

It is known from Lankers et al, Applied Spectroscopy, Volume 46, Number 9, 1992 to use relative motion between the sample and the laser focus. The laser light is focussed to a small spot on the surface of the sample.

Our co-pending International Patent Application No. WO 2008/090350 (published on 31 July 2008, after the priority date of the present application) describes such an apparatus, in which the sample is scanned in the longitudinal direction of the line focus. Synchronously with this, charge in the CCD is shifted from pixel to pixel in the same direction, towards an output register of the CCD, and continues to accumulate as the scan proceeds. This longitudinal line scan is repeated at laterally spaced locations. This enables a spectral map of an area of a sample to be obtained without performing a "step and stitch" process (in one axis), hence helping to avoid discontinuities and spectral errors.

When using such apparatus, the scattered light is usually collected from the sample using a microscope objective lens which has as high a magnification as possible. This maximises the optical collection efficiency. If a sample is to be mapped quickly at a lower resolution, e.g. 50µm, the data is averaged along the length of the line focus as it is acquired, to get the required resolution. However, in the lateral direction (orthogonal to the line focus), no such averaging takes place. Instead, the longitudinal line scan is repeated merely in sparse narrow strips, spaced apart by 50µm in this example. This has the limitation that no data is acquired from the sample between these strips.

### Summary of the Invention

The present invention provides spectroscopic apparatus according to claim 1.

The data may be shifted within the detector elements of the detector in a direction orthogonal to a direction in which the spectrum of scattered light is dispersed across the array of detector elements, such that said data from a given region of the sample is accumulated in the detector elements in synchronism with the relative movement. Alternatively, the data may be read out of the detector and then combined subsequently such that said data from a given region of the sample is accumulated in synchronism with the relative movement. The focus on the sample is a line focus. The line focus may be aligned with a row or column of the detector elements, such that light scattered from different portions of the line focus is directed to respective different detector elements within the row or column. The data may pass sequentially along the row or column from one element to the next.

Preferably the line focus sweeps an area of the sample during the relative movement in the first and second directions. In one preferred arrangement, the line focus moves in a zigzag fashion relative to the sample.

Data representing multiple wavenumbers spread across the spectrum can be acquired simultaneously, in the respective rows or columns of the two-dimensional array, while moving the data for each wavenumber along the respective columns or rows, synchronously with the relative movement of the line focus on the sample.

### Brief Description of the Drawings

A preferred embodiment of the invention will now be described by way of example, with reference to the accompanying drawings, wherein:
Fig 1 is a schematic diagram of spectroscopic apparatus;
Fig 2 is a plan view of an area of a sample to be analysed by the apparatus of Fig 1;
Fig 3 is a graph showing the variation of intensity of a light beam along a line focus in the apparatus of Fig 1;
Figs 4A,4B and 4C respectively show the line focus moving relative to the sample, a corresponding shift of charge within a CCD detector, and a spectrum received from one point in the line focus;
Fig 5 shows an alternative arrangement of part of the apparatus of Fig 1; and
Fig 6 is a plan view of an area of a sample, showing a preferred technique of the present invention.

### Description of Preferred Embodiments

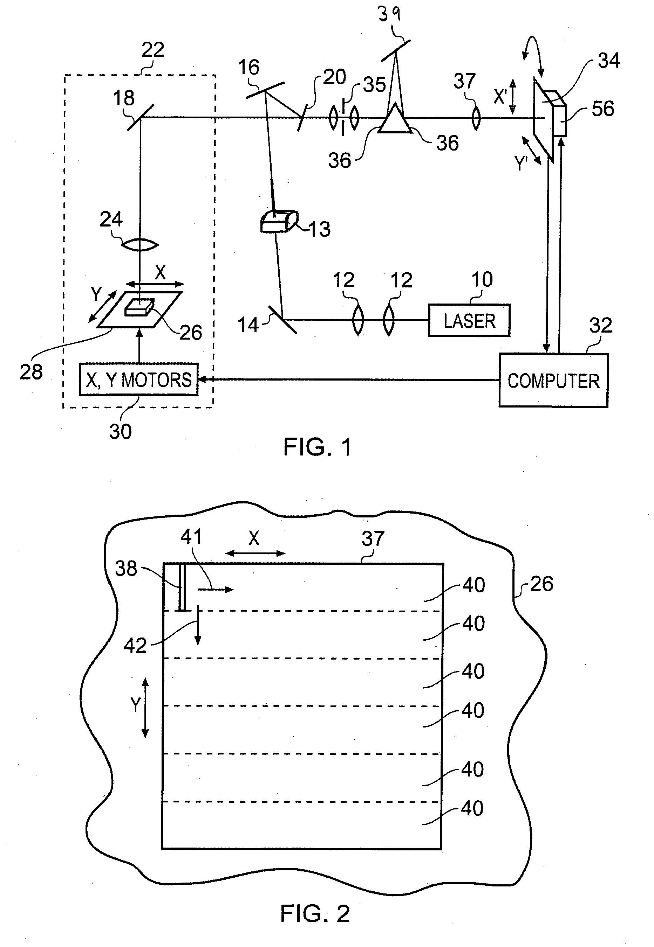

Referring to Fig 1, the spectroscopic apparatus comprises a laser 10 which acts as a source of exciting light. This is passed via a beam expander 12, a cylindrical lens 13, mirrors 14,16,18 and a filter 20 into a microscope 22. An objective lens 24 of the microscope 22 focuses the laser beam onto a sample 26 mounted on a stage or table 28. The stage 28 has motors 30 by which it can be moved in directions X and Y, under the control of a computer 32.

The illumination by the exciting laser beam generates scattered light, e.g. Raman scattered light at different frequencies/wavenumbers. This is collected by the microscope objective 24 and directed towards a two-dimensional photodetector array 34. It passes via the mirror 18, filter 20, a slit 35 (which may act confocally to control the depth resolution of the instrument), mirrors 36, a diffraction grating 39 and a focussing lens 37.

The preferred two-dimensional photodetector 34 is a CCD detector. The diffraction grating 39 disperses the spectrum of scattered light across the surface of the CCD 34, in a direction X'.

The filter 20 serves a dual purpose. Firstly, it reflects the exciting laser illumination from the laser 10, so as to inject it into the optical path towards the microscope 22 and sample 26. Secondly, it rejects Rayleigh scattered light having the same frequency as the illuminating laser beam and passes only the Raman spectrum of interest towards the CCD detector 34. A variety of different types of dielectric filter having such properties may be used, including for example a holographic filter (which may be placed at a low angle of incidence to the optical path as shown). If desired, more than one such filter may be provided in series, to improve the rejection of Rayleigh scattered light.

Many of the features of the arrangement described so far are to be found in US Patent No. 5,442,438. Rather than merely illuminating one single point at a time on the sample 26 with the laser beam, the cylindrical lens 13 is configured so that a line focus is produced. This then illuminates and excites Raman scattering from multiple points on the sample simultaneously.

As shown in Fig 2, typically the area 37 on the sample which is to be analysed has dimensions which are larger than the length of the illuminating line focus 38. Therefore, the line focus 38 is made to perform a raster scan of the area 37. In practice, the relative motion between the line focus of illuminating light and the sample is produced by moving the stage 28 using the motors 30 under the control of the computer 32. Alternatively, however, the illuminating beam itself may be scanned across the surface of a stationary sample, using motorised scanning mirrors to deflect the beams. Again, this is controlled by the computer 32.

In a conventional system, the line focus would first move in the direction X relative to the sample, as indicated by arrow 41, so as to scan a stripe 40. It would then be indexed in the direction Y, as indicated by arrow 42, so as to repeat such scans for successive stripes 40.

In the system described in our co-pending International Patent Application No. WO 2008/090350, the following method is adopted. Instead of first moving the illuminating line in the X direction orthogonal to its length, it is instead first moved continuously in the Y direction, parallel to its length (i.e. longitudinally). After each full scan in the Y direction (arrow 42) the line focus is stepped in the X direction (arrow 41) to an adjacent position on the sample, and another scan in the Y direction takes place. This process is repeated until the whole area 37 to be studied has been scanned. This all takes place under the control of the computer 32. It will be appreciated that there are then no stripes 40.

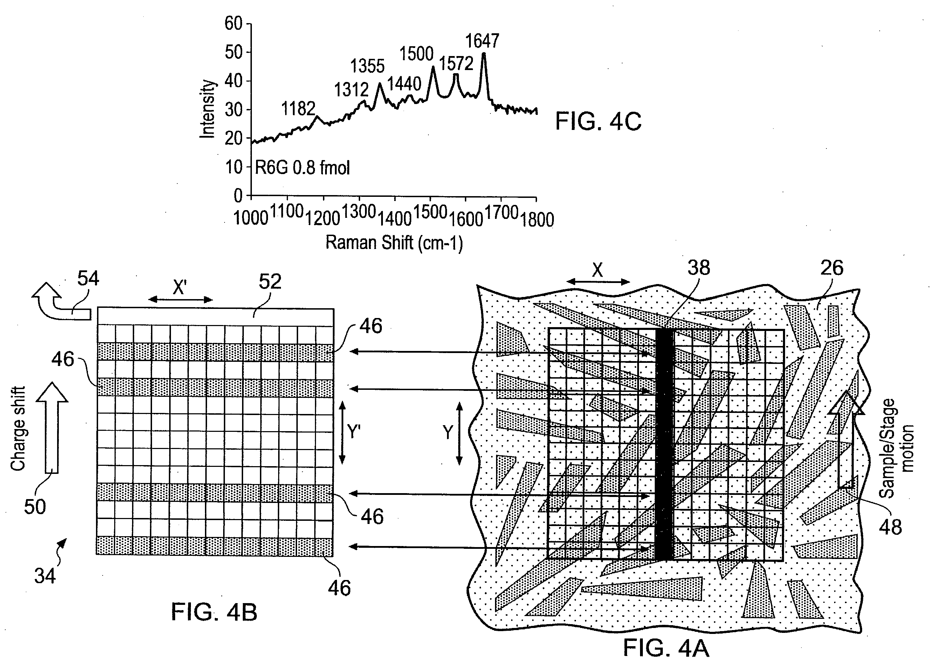

The method used in our co-pending International Patent Application No. WO 2008/090350 will be further described with reference to Figs 4A,4B and 4C.

Fig 4A shows a part of the surface of the sample 26, with an imaginary grid of the pixels of the CCD 34 superimposed over it for purposes of discussion. This grid, as shown, covers only a fraction of the area 37 of the sample to be studied. Also shown in Fig 4A is the line focus 38 of the illuminating laser beam. An arrow 48 shows the direction of movement of the sample relative to the line focus 38, as described above.

Fig 4B is a representation of the corresponding array of detector elements (pixels) of the CCD detector 34. For each point in the line 38 in Fig 4A, a Raman spectrum is dispersed in the X' direction along a row of the CCD detector array, for example as illustrated in rows 46. As shown in Fig 4C, this spectrum may correspond to a substance of interest at the corresponding position in the sample 26. It should be understood that the size of the pixels shown in Figs 4A and 4B have been exaggerated, compared to Fig 4C, and that in real life there are many times this number of pixels.

The exposure of a CCD to light results in the accumulation of charge in each detector element (pixel). This charge represents data and is in proportion to the amount of light it has received during the exposure. Normally, this charge is read out sequentially, after the exposure, by passing it from one detector element to the next. At each of these charge shifting steps, the charge from the pixels at the edge of the array is read into a shift register, from where it is read out and transferred to a computer.

In the present embodiment in Fig 4B, the charge is shifted in the direction indicated by arrow 50, in a direction Y' corresponding to the direction Y of the movement of the sample (arrow 48, Fig 4A). It is read one row at a time into a shift register 52, from where it is read out to the computer 32 as indicated at 54. Thus, at any one time during the readout process, the shift register 52 holds the data for one complete spectrum at one point on the line 38.

The shifting of the charge as indicated by arrow 50 takes place simultaneously and synchronously with the scanning of the line 38 in the direction Y as indicated by arrow 48, under the control of the computer 32. The exposure of the CCD to the light continues during this scanning, and charge continues to accumulate as it is shifted from one detector element of the CCD array to the next. Because the charge is shifted synchronously with the relative motion of the sample and the line focus 38, and in the same direction, the light from a given point in the sample 26 continues to accumulate as a spectrum for that point, as shown in Fig 4C. Such synchronous scanning of the CCD and of the stage continues in the Y direction as indicated by the arrow 42 in Fig 2, until the line focus has traversed the entire length of the area 37 to be analysed. Then the line focus 38 is stepped to an adjacent position as indicated by arrow 41, and the same procedure takes place until a raster scan has been built up of the entire area 37.

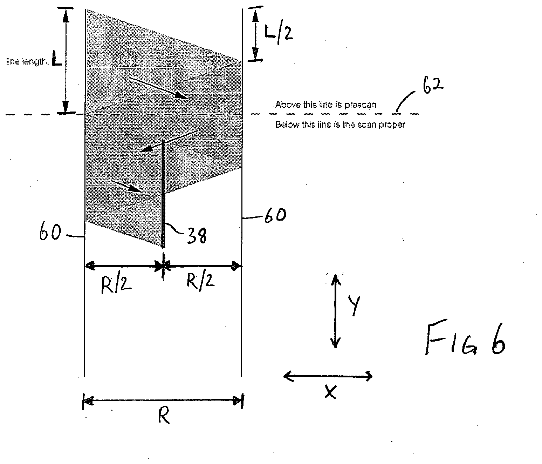

Reference has been made to the accumulation of charge (data) from a point in the sample 26. However, in a lower resolution system, charge may be accumulated from a small area or region of the sample, as described below with reference to Fig 6.

There are several advantages to the technique described above.

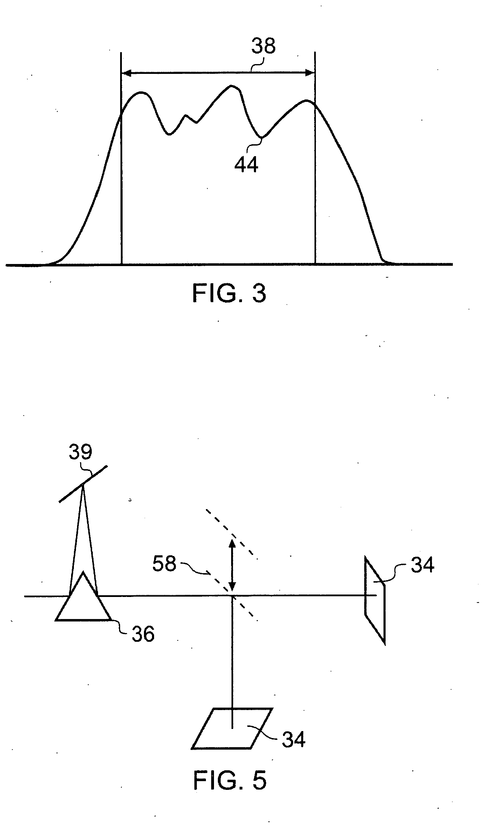

A first advantage will be explained with reference to Fig 3. This shows the intensity characteristic of the illuminating laser beam along the length of the line focus 38. Ideally of course, it would be a "top hat" function, having uniform intensity throughout the length of the line 38. In reality, however, this is not possible, and so the intensity curve 44 varies from one position along the line to another. The result, in the conventional technique, is that spectra taken simultaneously from different points along the line have different intensities. This makes it difficult to perform a quantitative analysis which compares the spectra, and to deduce the molecular composition and other information about the various illuminated points along the line. To achieve an appropriate "top hat" function would require a point source laser with a diffractive optical element, which would be expensive.

With the present technique, however, any given point on the sample 26 is illuminated successively by light from each position within the length of the line focus 38. Thus, each point on the sample experiences illumination from each of the differing intensities shown by the curve 44 in Fig 3. The effect is to integrate all these intensities so that the differences between them have no effect.

A second advantage is that there is a smooth transition of the illuminating line 38 throughout the Y direction of the area 37, so that no differences are perceived between different stripes 40 as in the prior technique described. The data is acquired seamlessly and there is no need to try to stitch together data at the edges of strips 40.

A third advantage is that should there be any differences between the responses of different detector elements of the CCD array 34, or variations in instrument transfer function between different pixels, then these too are integrated over the whole area of the sample. So this has no effect on the resulting output as it would in the prior art, and facilitates accurate analysis of the results. Indeed, even a defective detector element which gave no signal output could be tolerated.

A fourth advantage is that scanning a line focus results in faster mapping of the sample area, compared to point-by-point scanning. In cases where a large sample area is to be mapped with only a short exposure time at each point, then it can be shown that the present method is even faster than the previously known method of line focus scanning.

It will be noted that the direction 50 of the charge shift in Fig 4B is orthogonal to the prior art synchronous scanning method described with reference to Fig 8 of US Patent No. 5,442,438. In that prior method, the charge is shifted in the direction of the spectral dispersion, corresponding to the direction X' in Fig 4B of the present application. Thus, the present invention achieves a different effect from that described in the prior patent.

The computer 32 is programmed to control the shifting of the charge synchronously with the movement of the motors 30. It also controls the readout 54 from the shift register 52 and the resulting data acquisition. If it is desired to produce the relative motion of the line focus 38 and the sample by scanning the light beam across a stationary sample, the computer 32 may control the scanning mirrors which cause the scanning of the illuminating beam and which collect the scattered light from a sample.

If it is desired to have the ability to provide the synchronous scanning described in the embodiment above, as well as the synchronous scanning in the spectral dimension as described in US Patent No. 5,442,438, then there are several possibilities. Preferably we use the technique described in our co-pending International Patent Application WO2008/135766 (which claims priority from UK Patent Application No. 0708582.2.). Another such possibility is to utilise a CCD detector array which has the ability to shift charges in both the X' and Y' directions, to respective shift registers on orthogonal edges of the array. The charges can then be shifted in the Y' direction as described above, or in the X' direction if it is desired to perform the method according to the prior patent.

Alternatively, as shown in Fig 1, the CCD detector 34 may be mounted on an optional rotatable mounting 56. This is indexable through 90°, between a position in which it can perform the method described above, and an orthogonal position in which it can perform the method of the prior patent. To ensure repeatable repositioning of the detector at each of the two orthogonal positions, the rotatable mounting may comprise kinematic mounts at each of the two indexed positions. If desired, the rotatable mounting 56 may be motorised and under control of the computer 32 to change the scanning mode from one position to the other.

Alternatively, as shown in Fig 5, two CCD detectors 34 may be used. One is set up to perform the technique as described above, while the other is set up to perform the technique of the prior patent. The light may be switched from one detector to the other by a movable mirror 58, which can be moved into and out of the beam path. Again, this may be motorised and under the control of the computer 32, if desired. Further methods of switching between one CCD detector and another are possible, such as mounting both of them side-by-side on a linear slide so that the desired one can be positioned in the optical path.

A preferred technique according to the present invention will now be described with reference to Fig 6. It is similar to the techniques described above and in our co-pending International Patent Application No. WO 2008/090350, except as follows. It is intended for gathering data from the sample at a lower resolution R in the X direction than the above techniques, e.g. 50µm.

Fig 6 shows two longitudinal scanning boundary lines 60, parallel to the line focus 38 and spaced apart by the lateral resolution R (50µm). The computer 32 is programmed to move the X,Y motors 30 of the stage 28 simultaneously, so that the relative motion between the sample and the line focus 38 proceeds in a zigzag between the two boundary lines, as shown in Fig 6. Thus, in the same time that it takes the Y motor of the stage to move the sample by the length of the line 38, the X motor of the stage moves it laterally by a distance R/2 from a central position to one of the boundary lines 60, reverses direction and moves it by a distance R to the other boundary line, and then moves it back to the central position. This ensures that the entire area between the boundary lines 60 is swept by the line focus 38.

This zigzag motion is repeated between the boundary lines 60 over the entire length in the Y direction of the area 37 to be scanned (arrow 42 in Fig 2). The stage is then stepped in the X direction by the distance R (arrow 41 in Fig 2) and the zigzag motion is repeated. In this way, the entire area 37 is covered by the scan.

As previously, the spectra from the various points in the line 38 are dispersed in the X' direction across the CCD 34. The charges accumulating in the CCD 34, representing these spectra, are shifted in the Y' direction simultaneously and synchronously with the Y movement of the stage 28, and are read out to the computer 32 via the output shift register 52.

Because of the lateral zigzag movement of the line focus relative to the sample, the data of each collected spectrum is averaged over the lateral resolution distance R. If no binning (combination of the charges from adjacent pixels) is performed as the data is read out via the register 52, then the resulting data would be the equivalent of a wide spot (one pixel in the Y direction and n pixels in the X direction, where n is the number of pixels in the distance R). However, binning may be applied, under the control of the computer 32, to vary the resolution in the Y direction. The data from these wide spots is then added together, to give resolutions of varying aspect ratios, up to and beyond square.

As shown in Fig 6, the line 38 scans each part of the sample with a bidirectional pass. This helps to ensure that sampling of the area is performed evenly. The initial data collected over the first line length L, above a line 62, is not bidirectional, and considered as a prescan, which is discarded.

The advantage of this technique is that data can be obtained representing the entire area of the sample, at any desired resolution, without omitting any areas between the boundary lines of the scan. Thus, a small particle of a substance will influence the averaged results, whereas if scanning were to proceed in sparse narrow strips corresponding to the resolution R, it could be missed.

Rather than the CCD 34, other detectors are possible, such as a two-dimensional CMOS photodetector array. In this case, transfer of charge within the detector chip itself is not possible, so the data for multiple exposures is read out of the detector, and then combined and manipulated subsequently within the computer 32. The computer is programmed to combine the data in the same manner as if it had been accumulated within the detector chip as described above. That is, the data concerning light from a given region in the sample 26 is accumulated in synchronism with the scan as data for that region, even though collected from different pixels of the detector as the scan progresses. A high-speed detector chip should be used for best results, and a higher level of read-out noise may be suffered.

## Claims

1. Spectroscopic apparatus comprising:
a source (10) of exciting light arranged to produce a line focus (38) extending on a sample (26) in a first direction and to generate therefrom scattered light, the line focus (38) and the sample being movable relative to each other;
a detector (34) having multiple detector elements arranged in a two-dimensional array;
an optical path between the sample (26) and the detector (34), arranged such that the scattered light is dispersed into a spectrum directed across detector elements within the array;
wherein data representing the amount of light received by the detector (34) from a given region in the sample (26) is accumulated in or from corresponding detector elements, which are exposed to the scattered light from the given region as the scattered light from the given region moves across the array of detector elements in synchronism with movement of the line focus (38) relative to said given region of the sample (26), the line focus (38) being arranged to move relative to the sample (26) in the first direction and in a second direction transverse to the first direction, wherein the line focus sweeps an area of the sample (26) bidirectionally during the relative movement in the second direction such that the given region from which data accumulates includes points on the sample (26) which are spaced from each other in a direction transverse to the line focus (38).

2. Spectroscopic apparatus according to claim 1, wherein data is shifted within the detector elements of the detector (34) in a direction orthogonal to a direction in which the spectrum of scattered light is dispersed across the array of detector elements, such that said data from a given region of the sample (26) is accumulated in the detector elements in synchronism with the relative movement.

3. Spectroscopic apparatus according to claim 1, wherein data is read out of the detector (34) and then combined subsequently such that said data from the given region of the sample (26) is accumulated in synchronism with the relative movement.

4. Spectroscopic apparatus according to any one of the preceding claims, wherein the line focus (38) is aligned with a row or column of the detector elements, such that light scattered from different portions of the line focus (38) is directed to respective different detector elements within the row or column.

5. Spectroscopic apparatus according to claim 4 wherein the data is passed sequentially along the row or column from one element to the next.

6. Spectroscopic apparatus according to any one of the preceding claims, wherein the line focus (38) moves in a zigzag fashion relative to the sample (26).

7. Spectroscopic apparatus according to any one of the preceding claims, wherein the line focus (38) sweeps an entire area of the sample (26) between two boundary lines (60) parallel to the line focus (38), without omitting any areas between the boundary lines (60).

8. Spectroscopic apparatus according to claim 1, wherein data representing multiple wavenumbers spread across the spectrum is acquired simultaneously, in the respective rows or columns (46) of the two-dimensional array, while moving the data for each wavenumber along the respective columns or rows, synchronously with the relative movement of the line focus (38) on the sample (26).

## Patentansprüche

1. Spektroskopische Vorrichtung, umfassend:
eine Quelle (10) für erregendes Licht, die derart angeordnet ist, einen Zeilenfokus (38) zu erzeugen, der sich auf eine Probe (26) in einer ersten Richtung erstreckt, und daraus gestreutes Licht zu erzeugen, wobei der Zeilenfokus (38) und die Probe relativ zueinander bewegbar sind;
einen Detektor (34) mit mehreren Detektorelementen, die in einer zweidimensionalen Gruppierung angeordnet sind;
einen optischen Pfad zwischen der Probe (26) und dem Detektor (34), der so angeordnet ist, dass das gestreute Licht in ein Spektrum dispergiert wird, das über die Detektorelemente innerhalb der Gruppierung gerichtet ist;
wobei Daten, die den Lichtbetrag, der von dem Detektor (34) von einem gegebenen Bereich in der Probe (26) empfangen wird, repräsentieren, in oder von entsprechenden Detektorelementen gesammelt wird, die dem gestreuten Licht von dem gegebenen Gebiet ausgesetzt sind, wenn sich das gestreute Licht von dem gegebenen Gebiet über die Gruppierung von Detektorelementen synchronisiert mit der Bewegung des Zeilenfokus (38) relativ zu dem gegebenen Gebiet der Probe (26) bewegt, wobei der Zeilenfokus (38) so angeordnet ist, dass er sich relativ zu der Probe (26) in der ersten Richtung und in einer zweiten Richtung quer zu der ersten Richtung bewegt, wobei der Zeilenfokus einen Bereich der Probe (26) bidirektional während der relativen Bewegung in der zweiten Richtung überstreicht, so dass das gegebene Gebiet, von dem die Daten gesammelt werden, Punkte an der Probe (26) umfasst, die voneinander in einer Richtung quer zu dem Zeilenfokus (38) beabstandet sind.

2. Spektroskopische Vorrichtung nach Anspruch 1, wobei Daten innerhalb der Detektorelemente des Detektors (34) in einer Richtung orthogonal zu einer Richtung verschoben werden, in der das Spektrum von gestreutem Licht über die Gruppierung von Detektorelementen dispergiert ist, so dass die Daten von einem gegebenen Gebiet der Probe (26) in den Detektorelementen synchron mit der relativen Bewegung gesammelt werden.

3. Spektroskopische Vorrichtung nach Anspruch 1, wobei Daten aus dem Detektor (34) ausgelesen und dann anschließend kombiniert werden, so dass die Daten von dem gegebenen Gebiet der Probe (26) synchron mit der relativen Bewegung gesammelt werden.

4. Spektroskopische Vorrichtung nach einem der vorhergehenden Ansprüche, wobei der Zeilenfokus (38) mit einer Reihe oder Spalte der Detektorelemente ausgerichtet ist, so dass das von verschiedenen Abschnitten des Zeilenfokus (38) gestreute Licht an jeweilige verschiedene Detektorelemente innerhalb der Reihe oder Spalte gerichtet ist.

5. Spektroskopische Vorrichtung nach Anspruch 4, wobei die Daten sequentiell entlang der Reihe oder Spalte von einem Element zu dem nächsten geführt werden.

6. Spektroskopische Vorrichtung nach einem der vorhergehenden Ansprüche, wobei sich der Zeilenfokus (38) in einer Zickzack-Weise relativ zu der Probe (26) bewegt.

7. Spektroskopische Vorrichtung nach einem der vorhergehenden Ansprüche, wobei der Zeilenfokus (38) einen gesamten Bereich der Probe (26) zwischen zwei Grenzlinien (60) parallel zu dem Zeilenfokus (38) überstreicht, ohne Bereiche innerhalb der Grenzlinien (60) wegzulassen.

8. Spektroskopische Vorrichtung nach Anspruch 1, wobei Daten, die mehrere Wellenzahlen repräsentieren, die sich über das Spektrum ausbreiten, simultan in jeweiligen Reihen oder Spalten (36) der zweidimensionalen Gruppierung aufgenommen werden, während die Daten für jede Wellenzahl entlang der jeweiligen Spalten oder Reihen synchron mit der relativen Bewegung des Zeilenfokus (38) an der Probe (26) bewegt werden.

## Revendications

1. Appareil spectroscopique comprenant :
une source (10) de lumière excitée conçue pour produire une focalisation linéaire (38) s'étendant sur un échantillon (26) dans une première direction et pour générer une lumière diffusée à partir de celui-ci, la focalisation linéaire (38) et l'échantillon pouvant être déplacés l'un par rapport à l'autre ;
un détecteur (34) ayant plusieurs éléments de détection agencés en un réseau bidimensionnel ;
un chemin optique entre l'échantillon (26) et le détecteur (34), agencé afin que la lumière diffusée soit dispersée en un spectre dirigé sur des éléments de détection à l'intérieur du réseau ;
dans lequel les données représentant la quantité de lumière reçue par le détecteur (34) à partir d'une zone donnée dans l'échantillon (26) sont accumulées dans les éléments de détection correspondants ou à partir d'eux, lesquels sont exposés à la lumière diffusée venant de la zone donnée lorsque la lumière diffusée venant de la zone donnée traverse le réseau d'éléments de détection en synchronisation avec un mouvement de la focalisation linéaire (38) par rapport à ladite zone donnée de l'échantillon (26), la focalisation linéaire (38) étant agencée pour se déplacer par rapport à l'échantillon (26) dans la première direction et dans une deuxième direction transversale à la première direction, dans lequel la focalisation linéaire balaie bidirectionnellement une zone de l'échantillon (26) pendant le mouvement relatif dans la deuxième direction afin que la zone donnée à partir de laquelle les données s'accumulent inclue des points sur l'échantillon (26) lesquels sont espacés les uns des autres dans une direction transversale à la focalisation linéaire (38).

2. Appareil spectroscopique selon la revendication 1, dans lequel les données sont décalées dans les éléments de détection du détecteur (34) dans une direction orthogonale à une direction dans laquelle le spectre de lumière diffusée est dispersé sur le réseau d'éléments de détection, afin que lesdites données venant d'une zone donnée de l'échantillon (26) soient accumulées dans les éléments de détection en synchronisation avec le mouvement relatif.

3. Appareil spectroscopique selon la revendication 1, dans lequel les données sont lues à la sortie du détecteur (34) puis combinées par la suite afin que lesdites données venant de la zone de l'échantillon (26) soient accumulées en synchronisation avec le mouvement relatif.

4. Appareil spectroscopique selon l'une quelconque des revendications précédentes, dans lequel la focalisation linéaire (38) est alignée sur une rangée ou une colonne des éléments de détection, afin que la lumière diffusée depuis différentes parties de la focalisation linéaire (38) soit dirigée à des éléments de détection différents relatifs à l'intérieur de la rangée ou de la colonne.

5. Appareil spectroscopique selon la revendication 4, dans lequel les données sont passées séquentiellement le long de la rangée ou de la colonne d'un élément à l'autre.

6. Appareil spectroscopique selon l'une quelconque des revendications précédentes, dans lequel la focalisation linéaire (38) se déplace en zigzag par rapport à l'échantillon (26).

7. Appareil spectroscopique selon l'une quelconque des revendications précédentes, dans lequel la focalisation linéaire (38) balaye une zone entière de l'échantillon (26) entre deux lignes de limite (60) parallèles à la focalisation linéaire (38), sans omettre aucune zone entre les lignes de limite (60).

8. Appareil spectroscopique selon la revendication 1, dans lequel les données représentant plusieurs nombres d'onde répartis sur le spectre sont acquises simultanément, dans les rangées ou colonnes respectives (46) du réseau bidimensionnel, tout en déplaçant les données pour chaque nombre d'onde le long des colonnes ou rangées respectives, en synchronisation avec le mouvement relatif de la focalisation linéaire (38) sur l'échantillon (26).
